# EUROPEAN PATENT SPECIFICATION

(11) **EP 2 581 601 B1**
(45) Date of publication and mention of the grant of the patent: **20.12.2017**
(21) Application number: 10733019.3
(22) Date of filing: 14.06.2010
(51) Int. Cl.: H02H 7/06, H02P 9/00, H02P 9/10, F03D 9/25

(54) **ELECTRICITY GENERATION SYSTEM THAT WITHSTANDS VOLTAGE DIPS**
ELEKTRIZITÄTSERZEUGUNGSSYSTEM MIT BESTÄNDIGKEIT GEGENÜBER SPANNUNGSABFÄLLEN
SYSTEME DE GENERATION D'ENERGIE RESISTANT A DES CHUTES DE TENSION

(43) Date of publication of application: 17.04.2013
(73) Proprietor: Ingeteam Power Technology, S.A., 48170 Zamudio (Bizkaia) (ES)
(72) Inventor: MAYOR LUSARRETA, Jesús, E-31621 Sarriguren (Navarra) (ES); CÁRCAR MAYOR, Ainhoa, E-31621 Sarriguren (Navarra) (ES)
(74) Representative: Igartua, Ismael
(86) International application number: PCT/ES2010/070396
(87) International publication number: WO 2011/157862

(56) References cited:
- EP-A2- 1 863 162
- US-A1- 2010 117 605
- US-B2- 7 332 827

## Description

### OBJECT OF THE INVENTION

The present invention describes a power generation system resistant to voltage dips and a method for operating said generator.

### BACKGROUND OF THE INVENTION

The existence of disturbances in the power grid requires power generation plants to contribute to its stability, for example by injecting reactive current in the case of voltage dips. Until recently, these requirements have not become extensive to power plants based on renewable energy sources, as these represented a small percentage of the total power generated. However, in view of the spectacular increase in these types of power generation plants in recent years, the level of exigency of these types of power generation plants has increased considerably.

In the specific case of voltage dips, there are regulations that require aerogenerators to fulfill stringent requirements with regard to the reactive current injected into the grid during the voltage dip and it is envisaged that, once the voltage dip that required disconnection of the generator has been overcome, it can be quickly reconnected after the dip if voltage returns after a few seconds. In this manner, the active power that was being generated before the disturbance will be injected as quickly as possible. These requirements are usually expressed in the form of the so-called dip profile, which defines temporal and amplitude limits for the voltage dips that the aerogenerators must be capable of bearing.

The state of the art proposes different courses of action in the event of voltage dips, such as for example:
- A first structure is disclosed in WO2007057480A1, wherein the aerogenerator comprises variable impedance connected in parallel between the back-to-back converter and the generator rotor. When a voltage dip occurs, said impedance is activated to protect the back-to-back converter from the voltage surges that appear in the rotor during the dip, thereby allowing the generator stator to remain connected to the grid for a certain time interval from the start of the voltage dip, injecting reactive current during that time to contribute to grid recovery. If the duration of the voltage dip exceeds the limits marked within the dip profile, the generator will eventually become disconnected from the grid. The main advantage of this system is that it allows fulfillment of grid reactive current injection requirements during the time in which the generator remains connected to the grid. The main disadvantage is that the disconnection of the generator implies stopping the wind turbine, due to which a long time is required to couple it to the grid after the voltage dip.
- WO2009156540A1 and US07332827 disclose a second solution known in the art which is based on impedance connected to the generator stator. In this case, the operating method consists of activating said impedance at the time the dip is detected, which allows disconnection of the generator from the grid while controlling generator load torque and evacuating the power generated towards said impedance. The main advantage of this system is that, if the voltage recovers within a certain time interval, the stator can be coupled to the grid, provided that it does not exceed the maximum limits established by regulations. The drawback is that the generator is disconnected from the grid from the start of the voltage dip, due to which it cannot inject the reactive current required by grid operators to contribute to recovery thereof.

Therefore, neither of these systems allows fulfillment of grid requirements and fast reconnection once the voltage has been re-established.

### DESCRIPTION

The proposed invention resolves the aforementioned drawbacks through a system that combines the advantages of the two known systems of the prior art.

According to a first aspect, the voltage dip-resistant electrical power generation system of the invention comprises a doubly-fed generator, the rotor or which is connected to the power grid by a back-to-back converter and the stator thereof is connected to the power grid, in addition to comprising:
- at least one first additional impedance connected in parallel between the generator rotor and the back-to-back converter;
- at least one second additional impedance connected to the generator stator; and
- at least one control unit capable of governing the additional impedances.

The first additional impedance is activated when a voltage dip is detected, and, once the grid voltage falls below a dip profile, the second additional impedance is adapted to be activated and the stator is adapted to be disconnected from the grid.

That is, the system of the invention simultaneously comprises the two additional impedances disclosed by the systems of the prior art and at least one control unit that manages the activation/deactivation of said additional impedances according to the method described later in the text; said method makes them function in a coordinated manner, different to that of independent systems. The control unit(s) may be dependent or independent from the control unit of the converter.

While not explicitly mentioned herein, it is understood that the described system also comprises all the usual auxiliary elements of power generation systems based on doubly-fed generators known to a person skilled in the art. For example, it is evident that the connection between the stator and the grid will have a switch that allows disconnection of the generator, in addition to the existence of means, such as switches or similar, to activate the additional impedances at the times that will be defined later in the text.

It is understood that the generator rotor of the system can be moved by any type of renewable energy source, for example sea currents or tides. According to a preferred embodiment, however, the generator rotor is mechanically coupled to a wind turbine, thereby forming an aerogenerator assembly.

A second aspect of the invention is aimed at a method according to claim 3 fort operating the previously described system which combines the advantages of each of the systems known in the prior art, while avoiding the individual drawbacks of each. The power generation system detects a voltage dip and injects the required reactive current into the grid while the system is operating within the established dip profile. To this end, the first additional impedance is activated if necessary, even though the invention also comprises the case wherein activation is not required. When it detects that a maximum period operating under minimum voltage conditions has elapsed or when re-establishing control over aerogenerator load torque is deemed necessary, the stator is disconnected from the grid and the second impedance is activated, absorbing the power, which allows control of the generator through the load torque. Therefore when the grid recovers, the system is capable of synchronizing the voltage generated and that of the grid and coupling much faster than in the case of the systems known to date, thereby increasing system availability.

Therefore, the method of the invention comprises injecting reactive current into the grid without disconnecting the back-to-back converter when a voltage dip is detected (provided that the voltage exceeds the limits marked by the dip profile). The injection of reactive current can be carried out during a part or throughout the duration of this stage. In this manner, it contributes to grid recovery.

Additionally, after the maximum permitted period of operation under minimum voltage conditions has elapsed (this period is the time elapsed between the start of the voltage dip and the moment in which grid voltage drops below a dip profile imposed by a grid operator) or when re-establishing control over the load torque in the aerogenerator is deemed necessary, the stator is disconnected from the grid and the second additional impedance is activated. In this manner, rapid reconnection is allowed when grid voltage returns to its nominal values. When the end of the voltage dip is detected, stator voltage is synchronized with grid voltage and the stator is reconnected to the grid, subsequently deactivating the second additional impedance. The proposed invention also envisages that the order in which this last phase is carried out comprises firstly deactivating the second additional impedance and, subsequently, reconnecting the stator to the grid.

### BRIEF DESCRIPTION OF THE FIGURES

Figure 1 shows a diagram of a power generation system, according to the prior art, which comprises an additional impedance connected to the rotor.
Figure 2 shows the wave shapes of some characteristic operating magnitudes of the system of figure 1.
Figure 3 shows a diagram of a power generation system according to the prior art, which comprises an additional impedance connected to the stator.
Figure 4 shows the wave shapes of some characteristic operating magnitudes of the system of figure 3.
Figure 5 shows a diagram of a power generation system, according to the present invention, which comprises first and second additional impedances.
Figure 6 shows the wave shapes of some characteristic operating magnitudes of the system of the present invention represented in figure 5.

### DESCRIPTION OF A PARTICULAR EMBODIMENT

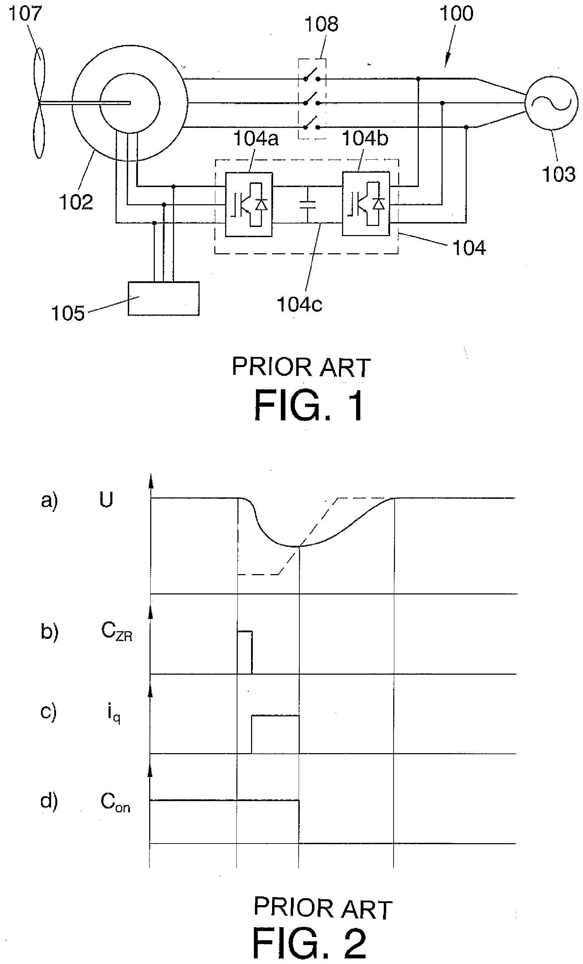

The invention is described below making reference to the attached figures. In particular, Figs. 1 and 2a-d show a system 100 according to the prior art specifically applied to wind power generation. This system comprises a doubly-fed generator 102, the rotor thereof is connected to the power grid 103 by a back-to-back converter 104 formed by a rotor converter 104a, a grid converter 104b and a direct current link 104c. The rotor is also mechanically coupled to a wind turbine 107. The stator, on the other hand, is connected to the grid 103 by means of a switch 108.

This system 100 comprises additional impedance 105 in parallel between the rotor and the back-to-back converter 104, which is activated in the event of voltage dips 103 to protect the rotor converter 104a from the transient surges generated during the dip. Figs. 2a-d respectively show grid voltage U behavior, activation C_{ZR} of the additional impedance 105, assuming that activation thereof has been required, the reactive intensity i_{q} injected into the grid 103 during the dip and the coupling status Cₒₙ of the generator 102 to the grid 103. It can be observed how, upon detecting the voltage dip, the additional impedance 105 is immediately activated for a short period of time (Fig. 2b), whereupon reactive current is injected into the grid 103 (Fig. 2c). Once grid 103 voltage U falls below the dip profile imposed by regulations, represented herein by a broken line in Fig. 2a, the generator 102 becomes disconnected (Fig. 2d).

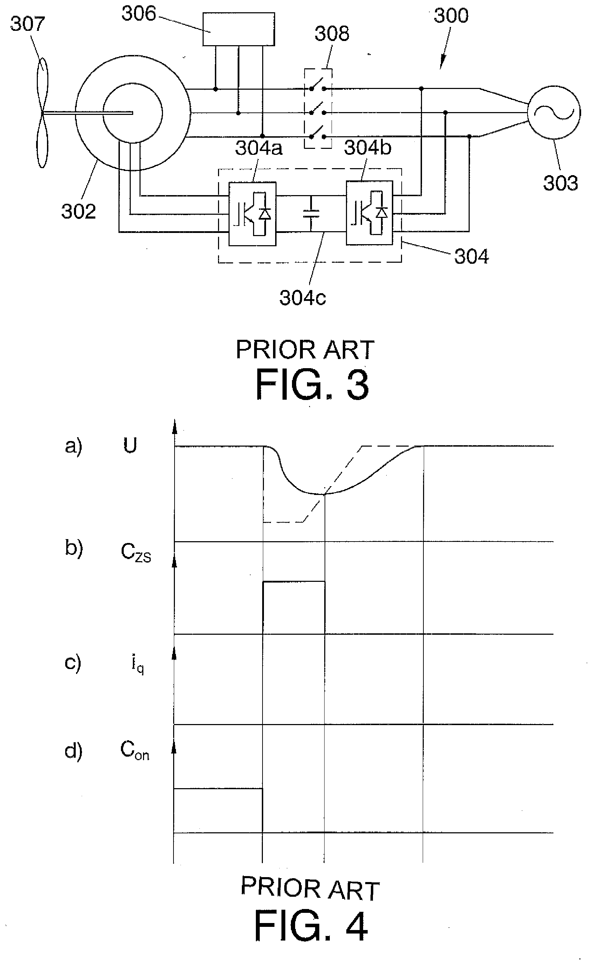

Figure 3 shows a second system 300, according to the prior art, where parts equivalent to those of the system 100 of Fig. 1 have been referenced using the same reference number but substituting the original 1 for a 3. The system 300, however, has additional impedance 306 connected to the generator stator 302. Figs. 4a-d show some characteristic system 300 magnitudes during operation thereof. Specifically, figure 4a shows the shape of the voltage U dip in relation to the dip profile imposed by regulations (dip profile represented herein by a broken line). From the time the dip is detected, the additional impedance 306 is activated C_{ZS} (Fig. 4b) and the generator 302 is decoupled Cₒₙ from the grid 303 (Fig. 4d). When grid 303 voltage U falls below the dip profile, the additional impedance is deactivated 306 (Fig. 4b). As can be observed in Fig. 4b, reactive intensity iq is not injected into the grid 303 at any point.

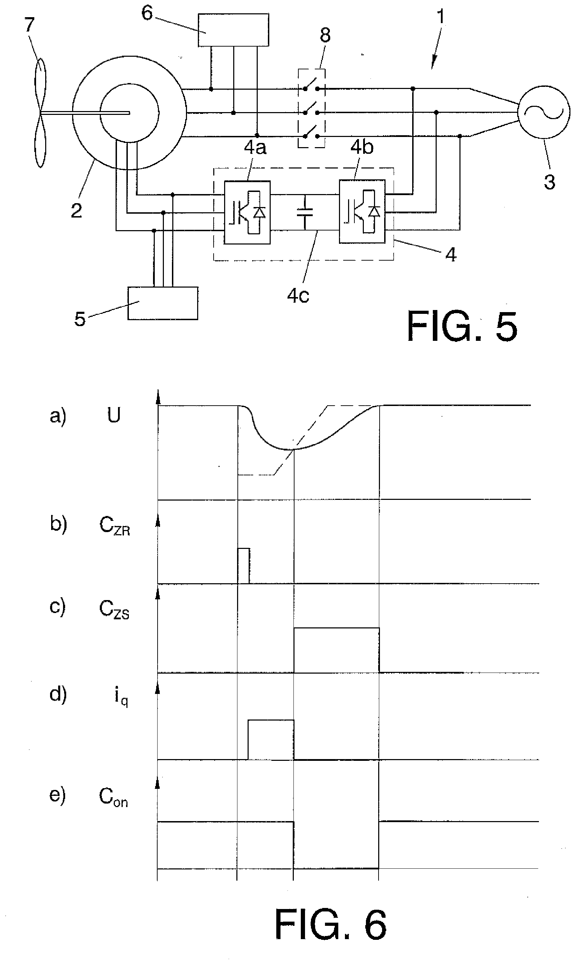

Fig. 5 shows the power generation system 1 of the invention that comprises an electric generator 2 mechanically coupled to a wind turbine 7, the stator thereof is connected to the grid 3 by means of a switch 8 and the rotor thereof is connected to a back-to-back converter 4 which is in turn connected to the grid 3. The back-to-back converter is formed by the rotor converter 4a and the stator converter 4b joined by a direct current link 4c. The system 1 also comprises a first additional impedance 5 connected in parallel between the generator rotor 2 and the rotor converter 4a and a second additional impedance 6 connected to the stator. The instants of activation/deactivation of the additional impedances 5 and 6 are controlled by means of a control unit (not shown).

Figures 6a-e show some graphics that illustrate the operation of the system 1 of the invention when a voltage dip occurs, the duration thereof requires the use of both additional impedances 5 and 6. Figure 6a shows the voltage dip in relation to the dip profile imposed by regulations (the dip profile is represented herein by means of a broken line). Firstly, as can be observed in Fig. 6b, the first additional impedance 5 is activated C_{ZR} and, shortly afterwards, reactive current i_{q} is injected into the grid 3 (Fig. 6d). In this embodiment, once grid 3 voltage U falls below the dip profile, the generator 2 is disconnected from the grid 3 (Fig. 6e) and the second additional impedance 6 is activated C_{ZS} (Fig. 6c). Evidently, as shown in Fig. 6d, the injection of reactive current i_{q} into the grid 3 ends at that moment and the power generated is dissipated in the second additional impedance 6. When grid 3 voltage U returns to its nominal values, as shown in Fig. 6a, stator voltage and grid 3 voltage are synchronized and the generator 2 is reconnected to the grid 3, whereupon the second additional impedance 6 is deactivated.

## Claims

1. Electrical power generation system resistant to voltage dips which comprises a doubly-fed generator (2), the rotor thereof is connected to the power grid (3) by a back-to-back converter (4) and the stator thereof is connected to the power grid (3), and
at least one first additional impedance (5) connected in parallel between the generator (2) rotor and the back-to-back converter (4); **characterized in that**
the system (1) further comprises at least one second additional impedance (6) connected to the generator stator (2), adapted to be activated once the grid voltage falls below a dip profile, and
at least one control unit capable of governing the additional impedances (5, 6),
the first additional impedance (5) being activated when a voltage dip is detected, and
the stator (2) being adapted to be disconnected from the grid (3) once the grid voltage falls below a dip profile.

2. System according to claim 1, where the generator (2) rotor is connected to a wind turbine (7).

3. Method for operating a system according to claim 1 or 2, **characterized in that** it comprises:
- detecting the voltage dip,
- remaining connected to the grid (3) and making use, for the required period of time, of the first additional impedance (5),
- injecting the required reactive current,
- detecting that a maximum operating period elapses under these conditions,
- disconnecting the stator from the grid (3) and activating the second additional impedance (6) once the grid voltage falls bellow a dip profile, thereby controlling the generator (2) load torque, making use of the second additional impedance (6),
- detecting the re-establishment of grid (3) voltage to values within the operating range,
- synchronizing stator voltage and grid (3) voltage,
- connecting the stator to the grid (3) and deactivating the second additional impedance (6).

## Patentansprüche

1. Erzeugungssystem für elektrische Leistung mit Beständigkeit gegenüber Spannungsabfällen, das einen doppelt gespeisten Generator (2), dessen Rotor über einen Rückumrichter (4) mit dem Stromnetz (3) verbunden ist und dessen Stator mit dem Stromnetz (3) verbunden ist, und
zumindest eine erste zusätzliche Impedanz (5) umfasst, die parallel zwischen dem Rotor des Generators (2) und dem Rückumrichter (4) geschaltet ist; **dadurch gekennzeichnet, dass**
das System (1) ferner zumindest eine zweite zusätzliche Impedanz (6), die mit dem Stator des Generators (2) verbunden ist, die ausgelegt ist, aktiviert zu werden, wenn die Netzspannung unter ein Spannungsabfallsprofil abfällt, und
zumindest eine Steuereinheit umfasst, die dazu in der Lage ist, die zusätzlichen Impedanzen (5, 6) zu verwalten,
die erste zusätzliche Impedanz (5) aktiviert wird, wenn ein Spannungsabfall detektiert wird, und
der Stator (2) ausgelegt ist, von dem Stromnetz (3) getrennt zu werden, wenn die Netzspannung unter ein Spannungsabfallsprofil abfällt.

2. System nach Anspruch 1, wobei der Rotor des Generators (2) mit einer Windturbine (7) verbunden ist.

3. Verfahren zum Betreiben eines Systems nach Anspruch 1 oder 2, **dadurch gekennzeichnet, dass** es Folgendes umfasst:
- Detektieren des Spannungsabfalls,
- Aufrechterhalten der Verbindung mit dem Stromnetz (3) und Verwendung der ersten zusätzlichen Impedanz (5) über den erforderlichen Zeitraum hinweg,
- Einspeisen des erforderlichen Blindstroms,
- Detektieren, dass ein maximaler Betriebszeitraum unter diesen Bedingungen abläuft,
- Trennen des Stators von dem Stromnetz (3) und Aktivieren der zweiten zusätzlichen Impedanz (6), nachdem die Netzspannung unter ein Spannungsabfallsprofil abgefallen ist, wodurch das Lastmoment des Generators (2) unter Verwendung der zweiten zusätzlichen Impedanz (6) gesteuert wird,
- Detektieren der Erholung der Netz- (3) Spannung auf einen Wert innerhalb des Betriebsbereichs,
- Synchronisieren der Statorspannung und der Netz- (3) Spannung,
- Verbinden des Stators mit dem Stromnetz (3) und Deaktivieren der zweiten zusätzlichen Impedanz (6).

## Revendications

1. Système de génération d'énergie électrique résistant à des chutes de tension, qui comprend un générateur à double alimentation (2), dont le rotor est raccordé au réseau électrique (3) par un convertisseur dos à dos (4) et dont le stator est raccordé au réseau électrique (3) et
au moins une première impédance supplémentaire (5) raccordée en parallèle entre le rotor de générateur (2) et le convertisseur dos à dos (4); **caractérisé en ce que**
le système (1) comprend en outre au moins une seconde impédance supplémentaire (6) raccordée au stator de générateur (2), apte à être activée une fois que la tension du réseau tombe en dessous d'un profil de chute et
au moins une unité de commande apte à gouverner les impédances supplémentaires (5, 6),
la première impédance supplémentaire (5) étant activée lorsqu'une chute de tension est détectée et
le stator (2) étant apte à être déconnecté du réseau (3) une fois que la tension de réseau tombe en dessous d'un profil de chute.

2. Système selon la revendication 1, dans lequel le rotor de générateur (2) est raccordé à une turbine éolienne (7).

3. Procédé d'exploitation d'un système selon la revendication 1 ou 2, **caractérisé en ce qu'**il comprend:
- la détection de la chute de tension,
- le maintien de la connexion au réseau (3) et l'utilisation, pendant la période de temps requise, de la première impédance supplémentaire (5),
- l'injection du courant réactif requis,
- la détection qu'une période de fonctionnement maximale s'écoule dans ces conditions,
- la déconnexion du stator du réseau (3) et l'activation de la seconde impédance supplémentaire (6) une fois que la tension du réseau tombe en dessous d'un profil de chute et ainsi la commande du couple de charge du générateur (2), l'utilisation de la seconde impédance supplémentaire (6),
- la détection du rétablissement de la tension du réseau (3) à des valeurs au sein de la plage de fonctionnement,
- la synchronisation de la tension du stator et de la tension de réseau (3),
- la connexion du stator au réseau (3) et la désactivation de la seconde impédance supplémentaire (6).
